# EUROPEAN PATENT APPLICATION

(11) **EP 2 141 667 A1**
(43) Date of publication of application: **06.01.2010**
(21) Application number: 08305328.0
(22) Date of filing: 25.06.2008
(51) Int. Cl.: G07F 7/10, G06Q 10/00

(54) **Identifier calculation method for web services**

(71) Applicant: Gemalto SA, 92190 Meudon (FR)
(72) Inventor: Godbert, Sylvain, 92190, Meudon (FR); Wolyniec, Jean Philippe, 92190, Meudon (FR); Meunier, Alain, 92190, Meudon (FR)
(74) Representative: Wlodarczyk, Lukasz Georges Kazimierz

(57) **Abstract**

The invention relates to a method for issuing a personal token (T) to a user (U).
A Card Management System (CMS) manages the issuance and administration of the personal token (T). A Web Service (WS) lets the user (U) customize his personal token (T). A personalization unit (PERSO) personalizes the personal token (T) according to CMS data (DATA_CMS) provided by the Card Management System (CMS), and to Web Service data (DATA_WS) provided by the Web Service (WS). The Web Service (WS) requests the user (U) to type personal information (INFO) which must be present in CMS data (DATA_CMS) for his personal token (T), computes from said personal information (INFO) an identifier (ID) for the personal token (T), and includes said identifier (ID) in the Web Service data (DATA_WS) it provides to the personalization unit (PERSO) for the user (U). The invention also relates to a corresponding system.

## Description

### Technical Field

The invention relates to the personalization of personal tokens, and in particular of banking smart cards.

### Background Art

As known in the art, banking institutions willing to issue banking cards typically operate a Card Management System (a.k.a CMS).

A CMS typically manages the issuance and administration of smart card deployments. In particular, a CMS can normally manage the cards as well as data, applets, digital credentials including PKI certificates or other information related to the cards throughout their lifecycle. In general, a CMS minimizes the time and costs associated with deploying and maintaining cards.

A banking institution typically uses a CMS to create a record for each card which has to be personalized, the record comprising information such as the card holder first and last name, the address of the card holder, etc. The banking institution CMS is typically connected with a personalization unit. The term "personalize" has a specific meaning in the context of smart cards. A personalization unit receives CMS data from the CMS, and based on the data (which comprise the above record), it is able to personalize a card, i.e. to transform a card (typically a white card obtained from a smart card manufacturer, which is generic), into the banking card of a given user, e.g. with the name of the user embossed on the card, the financial institution logo and a card serial number printed on the card body (or other graphical personalization), some key material, the name and the PIN code of the user stored inside the chip of the card (or other electrical personalization), some information relating to the user stored on the magnetic stripe of the card, and possibly all sorts of other elements. The personalization unit can also, once a card is personalized, provide other services such as mailing the card to the user based on address provided by the CMS, or send the PIN of the card to the user (preferably with communication means distinct from those used for sending the card, for security reasons).

In the field of banking cards, the security of the CMS is critical. For example, it should not be possible for a hacker to create fake banking cards, as this could have huge financial consequences. Therefore, it is typically not easy to change anything in a CMS as any change needs to be studied in details in order to check whether or not it may have an impact on security. This is particularly true if the CMS has undergone a security certification, which is typically lost if something is changed in the CMS as certified.

Gemalto has proposed several services letting customers customize their banking cards more than what the financial institutions' CMS allowed so far. An example of such service is called CardLikeMe, and it allows the user to define the background of his card, e.g. he could decide to print a picture of his dog instead of the default blue background which is common on many banking cards. Such service can also, for example, let the user define his own PIN code instead of having to memorize the PIN defined by the financial institution.

It is typically difficult to modify the CMS, for the above reasons, but also because the CMS is under the control of the financial institution, which may have all sorts of constraints (beside security) which make it difficult to modify it (e.g. lack of resources, other priorities, problem of maintenance contracts which do not allow such changes, especially if the CMS operation is subcontracted, etc.). Gemalto has proposed the above services through a distinct mechanism, which is typically a Web Service. The user requesting a banking card can request it as usual from his bank, and in parallel use the web service in order to customize the banking card further than what's defined by the bank CMS.

Unfortunately, this poses a problem. The personalization unit receiving the CMS records and the Web Service customized information should be able to reconcile the two sources of information, in order to be able to determine on which banking card it has to print the picture of the dog.

I n order to associate the outputs of the CMS and the outputs of the Web Services, it has been proposed to compute a card identifier uniquely identifying the card. In state of the art systems, the CMS is the entity which is able to compute this identifier, and it sends it to the Web Service. However, this poses a problem, because this require a minor modification in the CMS (in order to compute the identifier and transmit it), and even such minor modification can turn out to be impossible or very complex for the above reasons. It has been satisfactory in many instances, but it is often complex to manage. In addition, typical systems impose the communication of personal information between the CMS and the Web Service (e.g. the name of the user), and this may be problematic sometimes (it requires the link to be secured, and if the link is nonetheless cracked, it poses privacy problems and other issues).

It is therefore an aim of the invention to propose a system and method for personalizing a personal token such as a banking card in such a way that it allows the user of the personal token to customize it before personalization, while minimizing the constraints on the issuer of the personal token.

The problem is solved with the system according to claim 1 and the method according to claim 6.

### Brief Description of Figures in the Drawings

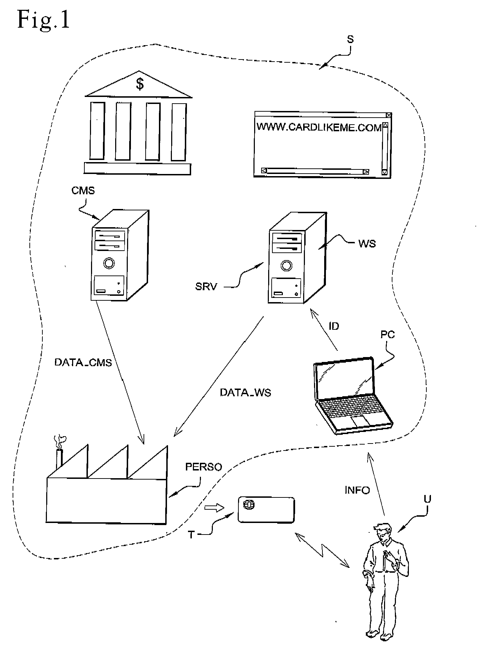

The invention and its advantages will be explained more in details in the following specification referring to the appended drawings, in which Figure 1 represents a preferred system according to the invention.

According to the invention, a system S for issuing a personal token T to a user U comprises a Card Management System CMS, a Web Service WS, and a personalization unit PERSO.

The personal token T is preferably a banking card, but could also be any kind of token (USB key, etc.).

The Card Management System CMS is set to manage the issuance and administration of the personal token T.

The Web Service WS is set to let the user U customize his personal token T. The Web Service WS is preferably made available in the form of a web page to which the user U can connect.

The personalization unit PERSO is set to personalize the personal token T according to CMS data DATA_CMS provided by the Card Management System CMS, and to Web Service data DATA_WS provided by the Web Service WS. CMS data DATA_CMS may comprise in particular some cryptographic keys (e.g. 3DES, AES, and/or RSA keys), some serial numbers, some dates, the first and last name of the user, the type of personal token T requested (e.g. regular bank card, gold card, platinum card, etc.), the PIN code and PUK code, etc. Web Service data DATA_WS may comprise for example pictures to be printed on the card body, or a PIN code defined by the user himself, in order to be easier to memorize.

The Web Service WS is set to request the user U to type personal information INFO which must be present in CMS data DATA_CMS for his personal token T. It should be noted that at the time the user U uses the Web Service WS, it might be that the Card Management System CMS is not yet aware of the fact that the user U is going to request a new personal token T, therefore it might be that no record exists yet in the Card Management System CMS for that user and that personal token T. In other words, maybe the personal information INFO is not yet present in CMS data DATA_CMS, since there is no CMS data DATA_CMS yet. However, when the record will be created, it will have to contain said personal information INFO. For example, it is not possible to request a banking card without giving at least one's first and last name. Therefore the personal information INFO can contain for example the first and last name, and possibly other elements, in order for the personal information INFO to uniquely the personal token T(a given user could have several personal token T, e.g. one banking card for personal use, one for business, and one on a joint account with his girlfriend, and the customization would be probably different for the three cards).

The Web Service WS is set to compute from said personal information INFO an identifier ID for the personal token T, and to include said identifier ID in the Web Service data DATA_WS it is set to provide to the personalization unit PERSO for the user U. This is advantageous, as when the personalization unit PERSO receives the CMS data DATA_CMS from the Card Management System CMS, it can compute the identifier ID, and when it receives the Web Service data DATA_WS from the Web Service WS, it can extract the identifier ID and match it with the Card Management System data DATA_CMS in order to personalize the personal token T with the requested customization. N.B. either the CMS data DATA_CMS or the Web Service data DATA_WS can arrive first at the personalization unit PERSO, it does not really matter from the point of view of the identifier ID computation and use. This allows the system S to work without having to change anything on the Card Management System CMS previously in place, and without having to exchange possibly sensitive data between the Web Service WS and the Card Management System CMS.

In preferred embodiments, the Web Service WS is hosted on a server SRV, and the system S comprises a personal computer PC set to let the user U connect to said server SRV. This is advantageous as this allows the user to customize his personal token from virtually anywhere, e.g. by connecting to the Web Service WS from a laptop (his personal computer PC) through the Internet. Of course, it could also be envisaged (e.g. for security reasons) that the Web Service WS be available only in certain contexts (e.g. in a bank branch), so the user would have to go to his bank and customize his banking card within an environment which is presumably more secure than his own personal computer PC (the personal computer PC could be infested with viruses etc.). This environment could be the Web Service itself (the user could have direct access to the server SRV hosting the Web Service WS), or the environment of a specific terminal connecting to the server SRV hosting the Web Service WS.

The part of the Web Service WS in charge of requesting personal information INFO and computing the identifier ID is preferably set to be downloaded and executed on the personal computer PC, and to discard the personal information INFO after it has computed the identifier ID. This is advantageous from a security standpoint, since it means that only the personal computer PC will have access to the personal information INFO, and will destroy it later on (either with a simple destruction, or with a secure algorithm, in which, for example, the personal information INFO is overwritten several times with random numbers). In particular, with this improvement, the personal information INFO does not need to travel on any network through the Web Service WS server SRV.

The above part of the Web Service WS may consist of a javascript executable by an Internet browser of the personal computer PC. It could also rely on other languages.

The computation of the identifier ID may comprise hashing the personal information INFO. Examples of hashing algorithm which are currently deemed secure include SHA-1, or SHA-256. But it is also possible to use less secure algorithms such as MD5, or even very basic techniques such as CRC, although, from a security standpoint, secure hash algorithms are preferred.

The computation of the identifier ID may also comprise computing a digital signature of the personal information INFO. The digital signature may be carried out directly on the personal information INFO, or on a hash of the personal information INFO, in which case a secure hash should be used (there's in general no point signing an insecure hash). The signature algorithm may be RSA, DSA, elliptic curves, or any algorithm deemed appropriate.

The invention also relates to a method for issuing a personal token T to a user (U), wherein a Card Management System CMS manages the issuance and administration of the personal token T, a Web Service WS lets the user U customize his personal token T, and a personalization unit PERSO personalizes the personal token T according to CMS data DATA_CMS provided by the Card Management System CMS, and to Web Service data DATA_WS provided by the Web Service WS. The Web Service WS requests the user U to type personal information INFO which must be present in CMS data DATA_CMS for his personal token T, it computes from said personal information INFO an identifier ID for the personal token T, and it includes said identifier ID in the Web Service data DATA_WS it provides to the personalization unit PERSO for the user U.

The preferred system embodiments described above can be transposed to the method according to the invention.

## Claims

1. System (S) for issuing a personal token (T) to a user (U), the system (S) comprising a Card Management System (CMS), a Web Service (WS), and a personalization unit (PERSO), wherein:
* the Card Management System (CMS) is set to manage the issuance and administration of the personal token (T),
* the Web Service (WS) is set to let the user (U) customize his personal token (T),
* the personalization unit (PERSO) is set to personalize the personal token (T) according to CMS data (DATA_CMS) provided by the Card Management System (CMS), and to Web Service data (DATA_WS) provided by the Web Service (WS),
**characterized in that** the Web Service (WS) is set
* to request the user (U) to type personal information (INFO) which must be present in CMS data (DATA_CMS) for his personal token (T)
* to compute from said personal information (INFO) an identifier (ID) for the personal token (T), and
* to include said identifier (ID) in the Web Service data (DATA_WS) it is set to provide to the personalization unit (PERSO) for the user (U).

2. System (S) according to claim 1, the Web Service (WS) being hosted on a server (SRV), the system (S) further comprising a personal computer (PC) set to let the user (U) connect to said server (SRV), wherein the part of the Web Service (WS) in charge of requesting personal information (INFO) and computing the identifier (ID) is set to be downloaded and executed on the personal computer (PC), and to discard the personal information (INFO) after it has computed the identifier (ID).

3. System (S) according to claim 2, wherein said part of the Web Service (WS) consists of a javascript executable by an Internet browser of the personal computer (PC).

4. System (S) according to any previous claim, wherein the computation of the identifier (ID) comprises hashing the personal information (INFO).

5. System (S) according to any previous claim wherein the computation of the identifier (ID) comprises computing a digital signature of the personal information (INFO).

6. Method for issuing a personal token (T) to a user (U), wherein:
* a Card Management System (CMS) manages the issuance and administration of the personal token (T),
* a Web Service (WS) lets the user (U) customize his personal token (T),
* a personalization unit (PERSO) personalizes the personal token (T) according to CMS data (DATA_CMS) provided by the Card Management System (CMS), and to Web Service data (DATA_WS) provided by the Web Service (WS),
**characterized in that** the Web Service (WS):
* requests the user (U) to type personal information (INFO) which must be present in CMS data (DATA_CMS) for his personal token (T)
* computes from said personal information (INFO) an identifier (ID) for the personal token (T), and
* includes said identifier (ID) in the Web Service data (DATA_WS) it provides to the personalization unit (PERSO) for the user (U).

7. Method according to claim 6, the Web Service (WS) being hosted on a server (SRV), wherein the user (U) connects to said server (SRV) through a personal computer (PC), wherein the part of the Web Service (WS) in charge of requesting personal information (INFO) and computing the identifier (ID) is downloaded and executed on the personal computer (PC), and discards the personal information (INFO) after it has computed the identifier (ID).

8. Method according to claim 7, wherein said part of the Web Service (WS) consists of a javascript executed by an Internet browser of the personal computer (PC).

9. Method according to any of claims 6 to 8, wherein the computation of the identifier (ID) comprises hashing the personal information (INFO).

10. Method according to any of claims 6 to 9, wherein the computation of the identifier (ID) comprises computing a digital signature of the personal information (INFO).
